# EUROPEAN PATENT APPLICATION

(11) **EP 2 975 504 A1**
(43) Date of publication of application: **20.01.2016**
(21) Application number: 14787697.3
(22) Date of filing: 23.04.2014
(51) Int. Cl.: G06F 3/042, G02B 6/12, G02B 6/122

(54) **POSITION SENSOR**

(30) Priority: 26.04.2013 JP 2013094223; 11.04.2014 JP 2014081779
(71) Applicant: Nitto Denko Corporation, Ibaraki-shi, Osaka 567-8680 (JP)
(72) Inventor: YOSHIOKA Ryoma, Ibaraki-shi Osaka 567-8680 (JP); SHIMIZU Yusuke, Ibaraki-shi Osaka 567-8680 (JP)
(74) Representative: Hoffmann Eitle
(86) International application number: PCT/JP2014/061351
(87) International publication number: WO 2014/175298

(57) **Abstract**

There is provided a position sensor configured to prevent a light-receiving element from sensing extraneous light. The position sensor A includes: an optical waveguide W in a sheet form including an under cladding layer 1 in a sheet form, a plurality of linear cores 2 arranged in a lattice form and formed on a surface of the under cladding layer 1, and an over cladding layer 3 in a sheet form formed to cover the cores 2; a light-emitting element 4 connected to one end surface of the cores 2; and a light-receiving element 5 connected to the other end surface of the cores 2. The entire outer surface of the optical waveguide W and the entire outer surface of the light-receiving element 5 are covered with a light shielding sheet S for shielding against light of a wavelength recognizable by the light-receiving element 5.

## Description

### TECHNICAL FIELD

The present invention relates to a position sensor for optically detecting a pressed position.

### BACKGROUND ART

A position sensor for optically detecting a pressed position has been hitherto proposed (see PTL 1, for example). This position sensor is configured such that a plurality of cores serving as optical paths are arranged in two directions perpendicular to each other and such that a cladding covers peripheral edge portions of the cores to provide a sheet form. The position sensor is also configured such that light from a light-emitting element is incident on one end surface of the cores and such that the light propagating in the cores is sensed by a light-receiving element at the other end surface of the cores. When part of the surface of the position sensor in the sheet form is pressed with a finger and the like, some of the cores corresponding to the pressed part are crushed (decreased in cross-sectional area as seen in the pressed direction). In the cores corresponding to the pressed part, the amount of light propagating therein is decreased and the amount of light sensed by the light-receiving element is accordingly decreased, so that the aforementioned pressed position is detected.

### RELATED ART DOCUMENT

### PATENT DOCUMENT

PTL 1: JP-A-HEI8(1996)-234895

### SUMMARY OF INVENTION

Unfortunately, there have been cases in which correct pressed positions cannot be detected due to circumstances.

As a result of the investigation into the cause of such cases, the present inventors have found that light of a wavelength recognizable by the aforementioned light-receiving element comes from outside the position sensor, passes through the cladding into the cores, and is sensed by the light-receiving element in some cases. In such cases, the light-receiving element senses not only the light from the light-emitting element but also the extraneous light (disturbance light). The disturbance light becomes noise to hinder the detection of the correct pressed positions.

In view of the foregoing, it is therefore an object of the present invention to provide a position sensor configured to prevent a light-receiving element from sensing extraneous light.

To accomplish the aforementioned object, a position sensor in a sheet form according to the present invention comprises: an optical waveguide in a sheet form including an under cladding layer in a sheet form, a plurality of linear cores arranged in a lattice form and formed on a surface of the under cladding layer, and an over cladding layer in a sheet form formed to cover the cores; a light-emitting element connected to one end surface of the cores; and a light-receiving element connected to the other end surface of the cores, wherein a part of the outer surface of the optical waveguide at which light coming from outside the position sensor arrives is covered with a light shielding layer for shielding against light of a wavelength recognizable by the light-receiving element, and wherein a pressed position is specified, based on a change in the amount of light propagating in the cores, when an outer surface of the optical waveguide is pressed at any position.

In the position sensor according to the present invention, part of the outer surface of the optical waveguide at which extraneous light arrives is covered with the light shielding layer for shielding against light of a wavelength recognizable by the light-receiving element. Thus, the light of the wavelength recognizable by the light-receiving element does not enter the inside of the optical waveguide from outside, so that the light-receiving element does not sense the extraneous light. As a result, the light-receiving element is capable of properly sensing light to detect the correct pressed position.

In particular, when an outer surface of the light-receiving element is also covered with the light shielding layer, the light of the wavelength recognizable by the light-receiving element is also prevented from being transmitted through the light-receiving element from outside. This prevents the light-receiving element from sensing the extraneous light with higher reliability to improve the accuracy of detection of the pressed position.

### BRIEF DESCRIPTION OF DRAWINGS

[FIG. 1] FIG. 1A is a plan view schematically showing a first embodiment of a position sensor, and FIG. 1B is an enlarged sectional view of principal parts thereof.
[FIG. 2] FIG. 2 is an enlarged sectional view of principal parts and schematically shows a second embodiment of the position sensor.
[FIG. 3] FIG. 3 is an enlarged sectional view of principal parts and schematically shows a third embodiment of the position sensor.
[FIG. 4] FIG. 4 is an enlarged sectional view of principal parts and schematically shows a fourth embodiment of the position sensor.
[FIG. 5] FIGS. 5A to 5F are enlarged plan views schematically showing configurations of intersection of linear cores arranged in a lattice form in the position sensor.
[FIG. 6] FIG. 6A is an enlarged plan view schematically showing paths of light at a continuous intersection, and FIG. 6B is an enlarged plan view schematically showing paths of light at a discontinuous intersection.

### DESCRIPTION OF EMBODIMENTS

Next, embodiments according to the present invention will now be described in detail with reference to the drawings.

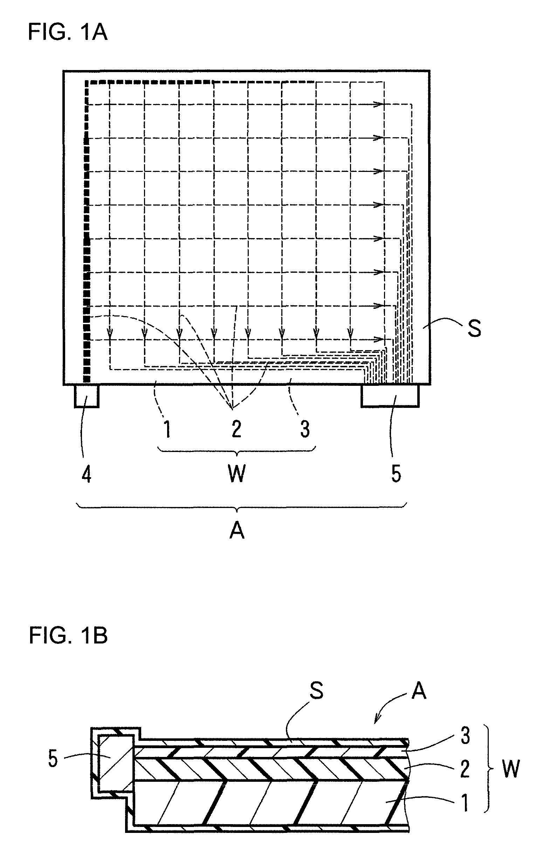

FIG. 1A is a plan view showing a first embodiment of a position sensor. FIG. 1B is a sectional view, on an enlarged scale, of part of the position sensor including a light-receiving element. The position sensor A of this embodiment includes: an optical waveguide W in a rectangular sheet form configured such that linear cores 2 arranged in a lattice form are held between an under cladding layer 1 and an over cladding layer 3 both in a rectangular sheet form; a light-emitting element 4 connected to one end surface of the linear cores 2 arranged in the lattice form; and the light-receiving element 5 connected to the other end surface of the linear cores 2. Light emitted from the light-emitting element 4 passes through the cores 2 and is received by the light-receiving element 5. In this embodiment, the whole of the position sensor A (the entire outer surface of the optical waveguide W, the entire outer surface of the light-emitting element 4 and the entire outer surface of the light-receiving element 5) is covered with a light shielding sheet (light shielding layer) S for shielding against light of a wavelength recognizable by the light-receiving element 5. In FIG. 1A, the cores 2 are indicated by broken lines, and the thickness of the broken lines indicates the thickness of the cores 2. Also, in FIG. 1A, the number of cores 2 are shown as abbreviated. Arrows in FIG. 1A indicate the directions in which light travels.

If extraneous light reaches the position sensor A from all directions, light of a wavelength recognizable by the light-receiving element 5 which is included in the extraneous light does not enter the inside of the optical waveguide W and the inside of the light-receiving element 5 because the whole of the position sensor A is covered with the light shielding sheet S. When a surface part of the light shielding sheet S corresponding to the optical waveguide W is pressed with a pen tip and the like in this state, the pressed part is deformed, so that the amount of light propagating in the cores corresponding to the pressed part is decreased. At this time, the light-receiving element 5 senses only the amount of decrease in light coming from the light-emitting element 4 but does not sense the extraneous light because the light of the wavelength recognizable by the light-receiving element 5 from the outside does not enter the inside of the optical waveguide W and the inside of the light-receiving element 5. Thus, the light-receiving element 5 is capable of properly detecting the pressed position.

There are a large number of choices for the location in which the position sensor A is placed because the position sensor A provides a shield against extraneous light from all directions. In other words, the position sensor A is usable in an environment where extraneous light reaches the position sensor A from above, from below and from the side.

The light shielding sheet S will be described in further detail.

Examples of the light shielding sheet S used herein include a light-absorbing sheet made of a material which absorbs light of a wavelength recognizable by the light-receiving element 5, and a light-reflective sheet which reflects the aforementioned light. The light-absorbing sheet and the light-reflective sheet may be used in combination.

When the wavelength recognizable by the light-receivingelement 5 is 850 nm, examples of a material for the formation of the light-absorbing sheet include resins containing dyes such as carbon, cyanine and phthalocyanine which absorb the wavelength. Preferably, the light-absorbing sheet has a thickness in the range of 1 to 200 µm. When the light-absorbing sheet is too thin, the light absorption property of the light-absorbing sheet tends to be poor. When the light-absorbing sheet is too thick, the light absorption property of the light-absorbing sheet is not significantly improved but the light-absorbing sheet tends to be lower in the detectivity of the pressed position.

An example of a material for the formation of the light-reflective sheet used herein includes metal regardless of the wavelength recognizable by the light-receiving element 5. Examples of the metal include aluminum, stainless steel and copper. Preferably, the light-reflective sheet has a thickness in the range of 1 to 200 µm. When the light-reflective sheet is too thin, there is a tendency for the light-reflective sheet to be liable to crack after frequent use, and there is a danger about the entry of light through the cracking. When the light-reflective sheet is too thick, on the other hand, the light reflection property of the light-reflective sheet is not significantly improved but the light-reflective sheet tends to be lower in the detectivity of the pressed position. In addition, it tends to be difficult for the light-reflective sheet to be restored to its original shape after being pressed.

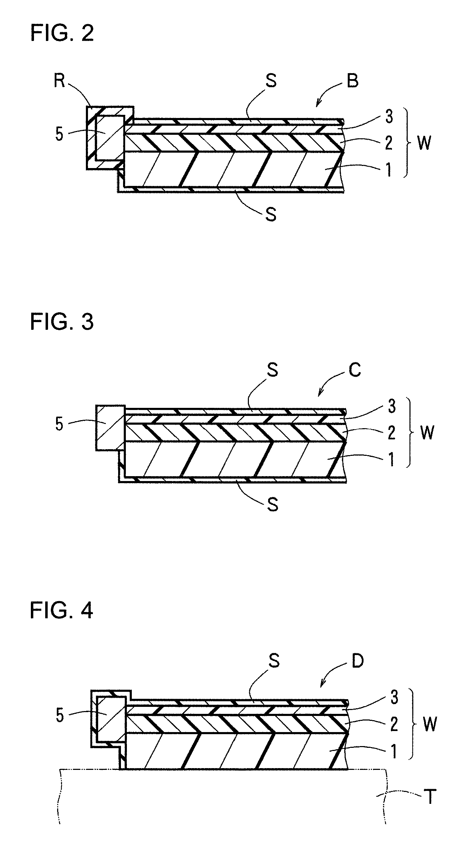

FIG. 2 is an enlarged sectional view of part of the position sensor including the light-receiving element and schematically shows a second embodiment of the position sensor. The position sensor B according to this embodiment is configured such that the outer surface of the light-receiving element 5 in the first embodiment shown in FIGS. 1A and 1B is covered with a light-absorbing resin layer (light shielding layer) R which absorbs light of a wavelength recognizable by the light-receiving element 5 instead of being covered with the light shielding sheet S. Examples of a material for the formation of the light-absorbing resin layer R include resins serving as the material for the formation of the light-absorbing sheet. The remaining parts of the second embodiment are similar to those of the first embodiment. Like reference numerals and characters are used in the second embodiment to designate parts similar to those of the first embodiment. The second embodiment produces functions and effects similar to those of the first embodiment.

FIG. 3 is an enlarged sectional view of part of the position sensor including the light-receiving element and schematically shows a third embodiment of the position sensor. The position sensor C according to this embodiment is configured such that the outer surface of the light-receiving element 5 in the first embodiment shown in FIGS. 1A and 1B and in the second embodiment shown in FIG. 2 is not covered with the light shielding layer such as the light shielding sheet S (with reference to FIG. 1B) and the light-absorbing resin layer R (with reference to FIG. 2). The remaining parts of the third embodiment are similar to those of the first embodiment. Like reference numerals and characters are used in the third embodiment to designate parts similar to those of the first embodiment.

In this embodiment, there is apprehension that light of a wavelength recognizable by the light-receiving element 5 which is included in the extraneous light enters the inside of the light-receiving element 5 because the outer surface of the light-receiving element 5 is not covered with the light shielding layer. However, the light-receiving element 5 is generally configured to have outer walls and the like formed around a light-receiving part, so that the outer walls and the like block the aforementioned light from reaching the light-receiving part. Thus, functions and effects similar to those of the first embodiment are produced even in the case where the outer surface of the light-receiving element 5 is not covered with the light shielding layer as in the third embodiment.

The light shielding layer for covering the lower surface of the under cladding layer 1 is in the sheet form (light shielding sheet S) in the first to third embodiments, but may be in the form of a rigid plate (light shielding plate). The upper limit of the thickness of the light shielding plate is generally 1000 µm but may exceed 1000 µm. In this case, the light shielding sheet S for covering the outer surface of the over cladding layer 3 and the like preferably has a thickness in the range of 1 to 200 µm in the same manner as described above.

FIG. 4 is an enlarged sectional view of part of the position sensor including the light-receiving element and schematically shows a fourth embodiment of the position sensor. The position sensor D according to this embodiment is configured such that parts other than the lower surface of the under cladding layer 1 in the first embodiment shown in FIGS. 1A and 1B are covered with the light shielding sheet S (that is, the lower surface of the under cladding layer 1 is not covered with the light shielding sheet S). The remaining parts of the fourth embodiment are similar to those of the first embodiment. Like reference numerals and characters are used in the fourth embodiment to designate parts similar to those of the first embodiment.

The position sensor according to this embodiment is used in such a condition that the lower surface of the under cladding layer 1 of the position sensor is in contact with the surface of a desk T or the like made of a material impervious to light of a wavelength recognizable by the light-receiving element 5. In this case, the desk T or the like blocks light coming from below the position sensor (coming from the under cladding layer 1 side) from entering the inside of the optical waveguide W and the inside of the light-receiving element 5. The light shielding sheet S blocks light coming from other directions from entering the inside of the optical waveguide W and the inside of the light-receiving element 5 as in the first embodiment.

In the aforementioned embodiments, examples of materials for the formation of the cores 2, the under cladding layer 1 and the over cladding layer 3 include photosensitive resins and thermosetting resins. The optical waveguide W may be produced by a manufacturing method depending on the materials. The cores 2 have a refractive index higher than the refractive indices of the under cladding layer 1 and the over cladding layer 3. The adjustment of the refractive indices may be made, for example, by adjusting the selection of the types of the materials for the formation of the cores 2, the under cladding layer 1 and the over cladding layer 3, and the composition ratio thereof. A rubber sheet may be used as the under cladding layer 1, and the cores 2 may be formed in a lattice form on the rubber sheet.

Also, an elastic layer such as a rubber layer may be provided, as required, on the lower surface of the under cladding layer 1. In this case, when the resilience of the under cladding layer 1, the cores 2 and the over cladding layer 3 are weakened or when the under cladding layer 1, the cores 2 and the over cladding layer 3 are originally made of materials having weak resilience, the elastic force of the elastic layer may be used to assist the weak resilience, thereby allowing the under cladding layer 1, the cores 2 and the over cladding layer 3 to return to their original states after the pressing of the pressed part is released.

The light-emitting element 4 is covered with the light shielding sheet (light shielding layer) S in the aforementioned embodiments. However, the light-emitting element 4 need not be covered with the light shielding layer such as the light shielding sheet S.

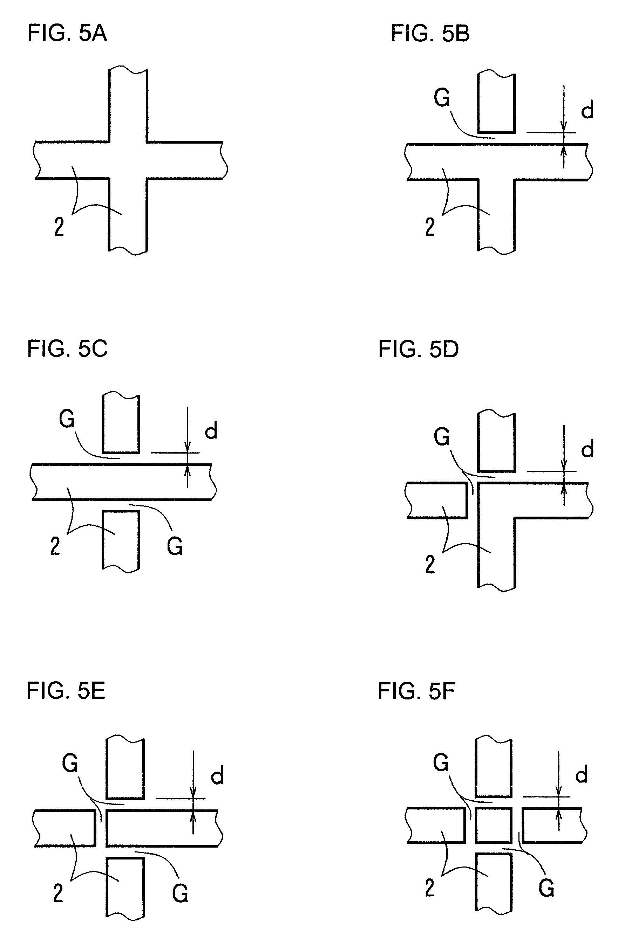

Each intersection of the linear cores 2 arranged in the lattice form is configured to be continuous in all of the four intersecting directions as shown in enlarged plan view in FIG. 5A in the aforementioned embodiments, but may be of other configurations. For example, each intersection may be separated by a gap G to become discontinuous only in one of the intersecting directions, as shown in FIG. 5B. The gap G is made of the material for the formation of the under cladding layer 1 or the over cladding layer 3. The gap G has a width d greater than 0 (zero) (it is only necessary that the gap G is formed) and generally not greater than 20 µm. Likewise, as shown in FIGS. 5C and 5D, each intersection may be discontinuous in two intersecting directions (in two opposed directions in FIG. 5C, and in two adjacent directions in FIG. 5D). Alternatively, each intersection may be discontinuous in three intersecting directions, as shown in FIG. 5E. Also, each intersection may be discontinuous in all of the four intersecting directions, as shown in FIG. 5F. Further, the cores 2 may be in a lattice form including two or more types of intersections shown in FIGS. 5A to 5F. The term "lattice form" formed by the linear cores 2 as used in the present invention shall be meant to include a lattice form in which part or all of the intersections are formed in the aforementioned manner.

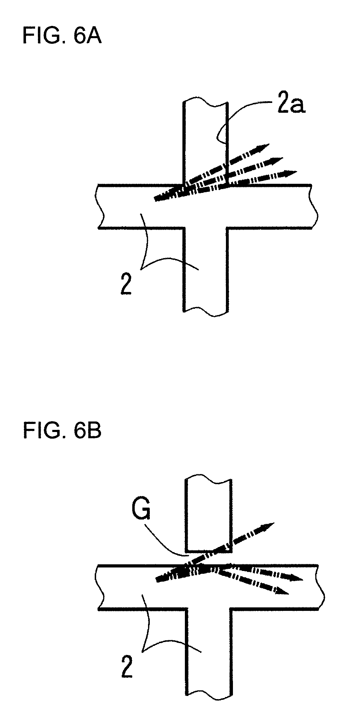

In particular, intersections which are discontinuous in at least one intersecting direction as shown in FIGS. 5B to 5F are capable of reducing intersection losses of light. At an intersection which is continuous in all of the four intersecting directions as shown in FIG. 6A, attention will be given on one intersecting direction (upward direction as seen in FIG. 6A). Then, part of light incident on the intersection reaches a wall surface 2a of a first core 2 perpendicular to a second core 2 through which the light travels, and is transmitted through the first core 2 (with reference to dash-double-dot arrows in FIG. 6A) because of the large angle of reflection from the wall surface. Such light transmission occurs also in the opposite intersecting direction (downward direction as seen in FIG. 6A). As shown in FIG. 6B, on the other hand, when an intersection is made discontinuous by the gap G in one intersecting direction (upward direction as seen in FIG. 6B), an interface between the gap G and a core 2 is formed. Then, part of light transmitted through the core 2 with reference to FIG. 6A is not transmitted through the core 2 but is reflected from the interface to continue traveling through the core 2 (with reference to dash-double-dot arrows in FIG. 6B) because of the smaller angle of reflection at the interface. Based on these facts, the reduction in intersection losses of light is achieved by making the intersection discontinuous in at least one intersecting direction as mentioned above. As a result, the sensitivity for detection of the pressed position with a pen tip and the like is increased.

Next, an inventive example of the present invention will be described in conjunction with a comparative example. It should be noted that the present invention is not limited to the inventive example.

### EXAMPLES

A position sensor entirely covered with a light shielding layer (with reference to FIGS. 1A and 1B) was prepared. Specifically, the position sensor includes: an over cladding layer having an upper surface covered with a light shielding sheet (having a thickness of 75 µm), with a double-sided adhesive tape (having a thickness of 25 µm) therebetween; an under cladding layer having a lower surface covered with a light shielding plate (having a thickness of 1 mm), with a double-sided adhesive tape (having a thickness of 50 µm) therebetween; and a light-emitting element and a light-receiving element which have outer surfaces covered with a light-absorbing resin layer. The light-emitting element and the light-receiving element are bonded with an ultraviolet curable resin to the end surfaces of cores. Materials for the formation of the components are described below.

[Light Shielding Layer and Double-Sided Adhesive Tape]

Light shielding sheet: PET (B100-75 available from Mitsubishi Plastics, Inc.).

Light shielding plate: ABS sheet (black) available from Ozawa Science Co., Ltd.

Light-absorbing resin layer: carbon black containing moisture-curable resin (Cemedine SX720B).

Double-sided adhesive tape: LUCIACS available from Nitto Denko Corporation.

[Material for Formation of Over Cladding Layer]
Component a: 40 parts by weight of an epoxy resin (Epogosey PT available from Yokkaichi Chemical Company Limited).
Component b: 60 parts by weight of an epoxy resin (2021P available from Daicel Corporation).
Component c: 4 parts by weight of a photo-acid generator (SP170 available from ADEKA Corporation).

A material for the formation of the over cladding layer was prepared by mixing these components a to c together.

### [Material for Formation of Cores]

Component d: 30 parts by weight of an epoxy resin (Epogosey PT available from Yokkaichi Chemical Company Limited).

Component e: 70 parts by weight of an epoxy resin (EXA-4816 available from DIC Corporation).

Component f: 4 parts by weight of a photo-acid generator (SP170 available from ADEKA Corporation).

A material for the formation of the cores was prepared by mixing these components d to f together.

### [Material for Formation of Under Cladding Layer]

Component g: 40 parts by weight of an epoxy resin (Epogosey PT available from Yokkaichi Chemical Company Limited).

Component h: 60 parts by weight of an epoxy resin (2021P available from Daicel Corporation).

Component i: 4 parts by weight of a photo-acid generator (SP170 available from ADEKA Corporation).

A material for the formation of the under cladding layer was prepared by mixing these components g to i together.

### [Production of Optical Waveguide]

The over cladding layer was formed on a surface of a base material made of glass by a spin coating method with the use of the aforementioned material for the formation of the over cladding layer. The over cladding layer had a thickness of 5 µm, an elasticity modulus of 1 GPa, and a refractive index of 1.504.

Next, the cores were formed on a surface of the over cladding layer by a photolithographic method with the use of the aforementioned material for the formation of the cores. The cores had a thickness of 30 µm, a width of 100 µm in a portion of a lattice form, a spacing of 600 µm, an elasticity modulus of 25 MPa, and a refractive index of 1.523.

Next, the under cladding layer was formed on the surface of the over cladding layer by a spin coating method with the use of the aforementioned material for the formation of the under cladding layer so as to cover the cores. The under cladding layer had a thickness of 200 µm (as measured from the surface of the over cladding layer), an elasticity modulus of 1 GPa, and a refractive index of 1.504.

Then, the black light shielding plate made of ABS with the double- sided adhesive tape affixed to one surface thereof was prepared. Next, the other adhesive surface of the double-sided adhesive tape was affixed to a surface of the under cladding layer. In that state, the over cladding layer was stripped from the base material made of glass.

Thereafter, the light shielding sheet made of PET was affixed to the surface of the over cladding layer, with the double-sided adhesive tape therebetween.

Next, the light-receiving element (s10226 available from Hamamatsu Photonics K.K. with a recognizable wavelength of 850 nm) was bonded and fixed to one end surface of the cores with the ultraviolet curable resin. The light-emitting element (XH85-S0603-2s available from Optowell Co., Ltd.) was connected to the other end surface of the cores. Then, the outer surfaces of the light-receiving element and the light-emitting element were covered with the light-absorbing resin layer.

### [Comparative Example]

A position sensor which was not covered with the light shielding sheet, the light shielding plate and the light-absorbing resin layer in the Inventive Example was prepared for the Comparative Example.

### [Evaluation of Position Sensor]

The position sensors in the Inventive and Comparative Examples were placed in a darkroom and in an outdoor location, and the intensity spectra of light received by the light-receiving element were measured. The illuminances at the surfaces of the position sensors were 0 lux in the darkroom, and 50000 lux in the outdoor location. The light-emitting element had an output of 5 mA.

As a result, the position sensor in the Inventive Example showed substantially similar intensity spectra of received light in the darkroom and in the outdoor location, so that the pressed position was specified when a surface of the position sensor was pressed with a pen tip. On the other hand, the position sensor in the Comparative Example showed an intensity spectrum of received light similar to that in the Inventive Example in the darkroom, so that the pressed position was specified when a surface of the position sensor was pressed with a pen tip. However, the position sensor in the Comparative Example was influenced by extraneous light in the outdoor location to show a high intensity of received light, so that the pressed position was not specified.

Results showing tendencies similar to those in the Inventive Example were produced by a position sensor in which the coating on the outer surface of the light-receiving element 5 was replaced with a light-absorbing resin layer (with reference to FIG. 2), a position sensor in which the outer surface of the light-receiving element 5 was not covered with the light shielding layer (with reference to FIG. 3), and a position sensor in which the lower surface of the under cladding layer 1 was not covered with the light shielding layer (with reference to FIG. 4).

Although specific forms in the present invention have been described in the aforementioned example, the aforementioned example should be considered as merely illustrative and not restrictive. It is contemplated that various modifications evident to those skilled in the art could be made without departing from the scope of the present invention.

The position sensor according to the present invention is usable for correctly specifying a pressed position with a pen tip and the like even in an intense-light environment.

### REFERENCE SIGNS LIST

- A: Position sensor
- S: Light shielding sheet
- W: Optical waveguide
- 1: Under cladding layer
- 2: Cores
- 3: Over cladding layer
- 4: Light-emitting element
- 5: Light-receiving element

## Claims

1. A position sensor in a sheet form, comprising:
an optical waveguide in a sheet form including an under cladding layer in a sheet form, a plurality of linear cores arranged in a lattice form and formed on a surface of the under cladding layer, and an over cladding layer in a sheet form formed to cover the cores;
a light-emitting element connected to one end surface of the cores; and
a light-receiving element connected to the other end surface of the cores,
wherein a part of the outer surface of the optical waveguide at which light coming from outside the position sensor arrives is covered with a light shielding layer for shielding against light of a wavelength recognizable by the light-receiving element, and
wherein a pressed position is specified, based on a change in the amount of light propagating in the cores, when an outer surface of the optical waveguide is pressed at any position.

2. The position sensor according to claim 1, wherein an outer surface of the light-receiving element is also covered with the light shielding layer.
